# EUROPEAN PATENT SPECIFICATION

(11) **EP 3 341 595 B1**
(45) Date of publication and mention of the grant of the patent: **22.06.2022**
(21) Application number: 16838609.2
(22) Date of filing: 24.08.2016
(51) Int. Cl.: C10M 177/00, F01M 1/08, F01M 9/02, F16N 7/40, C10N 30/00, C10N 30/02, C10N 40/25

(54) **METHOD AND APPARATUS FOR PREPARING AN OIL TO BE SUPPLIED TO THE CYLINDERS OF A TWO-STROKE CROSSHEAD ENGINE**
VERFAHREN UND VORRICHTUNG ZUR AUFBEREITUNG EINES ÖLS ZUR VERSORGUNG DER ZYLINDER EINES ZWEITAKT-KREUZKOPFMOTORS
PROCÉDÉ ET APPAREIL POUR LA PRÉPARATION D'UNE HUILE DEVANT ALIMENTER LES CYLINDRES D'UN MOTEUR À CROSSE À DEUX TEMPS

(30) Priority: 24.08.2015 DK 201500497
(43) Date of publication of application: 04.07.2018
(73) Proprietor: A.P. Møller - Mærsk A/S, 1263 Copenhagen K (DK)
(72) Inventor: OLSSON, Martin, SE-215 65 Malmö (SE); BAK WEIMAR, Henrik, DK-2830 Virum (DK); EMBLETON, Mark, 573908 Singapore (SG)
(74) Representative: EIP
(86) International application number: PCT/DK2016/050286
(87) International publication number: WO 2017/032383

(56) References cited:
- EP-A1- 1 640 442
- EP-A1- 2 767 578
- WO-A1-2006/069572
- WO-A1-2011/034537
- WO-A1-2017/067561
- DE-U1-202013 012 085
- US-A1- 2003 159 672
- US-A1- 2004 144 355
- US-A1- 2013 019 832

## Description

### TECHNICAL FIELD

The disclosure relates to a method for preparing an oil to be supplied to the cylinders of a two-stroke crosshead engine, in particular to a method for preparing such an oil on board of the marine vessel where the internal combustion engine is installed or on site at a power plant where the engine is used as a prime mover and to an apparatus for preparing an oil to be supplied to the cylinders of a two-stroke crosshead engine.

### BACKGROUND

The two oils used in the lubrication of a large two-stroke compression ignited internal combustion engine are very different in chemical composition and physical properties from one another. The oil used in the crankcase lubrication system is referred to as system oil, and lubricates and cools the main, bottom end and crosshead bearings, the crosshead slippers, camshaft, bearings and followers, and the chain or gear drive. On modern engines the oil is also used to cool the piston undersides. The system oil is in general never fully replaced, but topped up over time to maintain its condition

The oil used to lubricate the piston rings as they reciprocate in the cylinder liner and to neutralise the acids formed in the combustion chamber by the combustion of sulfur in the fuel is referred to as cylinder oil. The generic purposes of a cylinder lubricant (oil) are to protect the cylinder liners, pistons and piston rings from the harmful effects of combustion by-products and provide an oil film between piston rings and cylinder liners.

To achieve this, the cylinder lubricant is required to:
- Spread uniformly over the cylinder liner surface and form a stable oil film
- Provide a gas seal between the liner and the piston rings
- Neutralise acids formed from the by-products of the combustion process
- Minimise deposit formation on piston surfaces and ring grooves
- Flush out particles formed during combustion from the combustion chamber as well as wear particles
- Prevent a build-up of deposits in the piston ring grooves which can lead to ring sticking or breakage
- Prevent corrosion of the cylinder liner and other combustion chamber components while the engine is idle.

A cylinder lubricant usually comprises a base oil or a blends of base fluids a number of different additives that are designed help improve the lubricating ability of the base fluid dependent on the quality of the base fluid and its intended use.

The different additives are formulated from various over-based and neutral additive metallic alkaline salts, colloquially referred to as detergents. These chemicals are designed to be soluble in oil, and insoluble in water. Detergent additives provide a means to dissolve otherwise insoluble metallic salts such as calcium and magnesium carbonate into the lubricating oil. Marine detergent additives are classed as multi-functional additives due to the numerous different and beneficial performance features attributed to the type of additives used, i.e. they provide basicity to neutralize the acids (neutralization), and contribute to the anti-oxidant and dispersant properties of the lubricant to keep the piston and piston ring-land surfaces free from detrimental thermal oil degradation and fuel deposits. Moreover, certain detergents are known to have good anti-wear properties. Certain detergent additives are known to be very effective with high sulfur cylinder oils, e.g. over-based detergents, whilst neutral detergent additive technology tends to be used with low or very low sulfur fuel types.

The concentration of over-based additives needs to be matched to the fuel sulfur content to ensure that the lubricant has sufficient alkalinity reserves to neutralise the acids produced by the combustion process before it can have a damaging impact on the engine components, i.e. the higher the sulfur content of the fuel the higher the lubricant basicity reserve requirement. However, the basicity needs to be reduced when used in conjunction with low sulfur fuel types since the unreacted additives can form hard abrasive deposits which can accumulate on the piston crown-land and piston ring groves leading to a potential damage or unplanned shutdowns.

Acid neutralisation is a critical property to protect the inner surface of the cylinder liner from the acids generated during combustion. The cylinder lubrication oil is a total-loss oil since it is consumed through combustion and scrapedown in the lubrication process. The cylinder oil is depleted with each revolution of the main engine and replaced by fresh oil through intermittent injections.

The oil that is supplied to the cylinders usually has an SAE (society of automotive engineering) viscosity equivalent grade of 50 and can have any total base number (TBN) between 5 and 150 for the neutralization of acid products generated during the combustion process. Typically system oil has an SAE viscosity grade of 30 with a relatively low TBN that is typically below 10. These values are though merely by way of example, and may vary depending on the actual application-specific design of the systems that the oils are used in.

In recent years, there has been a trend towards blending the oil for delivering to the cylinders of the main engine on board the marine vessel where the main engine is installed. Hereto, used system oil is withdrawn from the crankcase lubrication system and blended (cut back) with a TBN agent to create a cylinder oil with the appropriate lubrication characteristics.

In recent years two-stroke crosshead engines have been operated for a large portion of their operation time at an engine load that is significantly below their maximum continuous rating. This is due to the fact that many freight ship companies choose to sail slower (slow steaming) than before, which results in the main engines being operated well below the maximum continuous rating, since these marine vessels were originally constructed to sail at significantly higher speed.

The viscosity of the cylinder oil specified for a particular engine is generally selected such that the actual viscosity (dynamic (shear) viscosity) at the temperature of the cylinder liner where the cylinder oil is applied is optimal for the cylinder liner temperature at maximum engine load (100% maximum continuous rating), i.e. sufficiently high for providing a proper lubrication of the piston rings against the inner surface of the cylinder liner at maximum engine load.

The viscosity of a cylinder oil in operation is affected by a number of factors. As temperature increases, the viscosity of a fluid decreases, and vice-versa. During the operation of a two-stroke crosshead engine the temperature varies according to engine load and RPM (revolutions per minute). As engine load and RPM increase, the temperature also increases and hence the viscosity of the lubricating oil decreases.

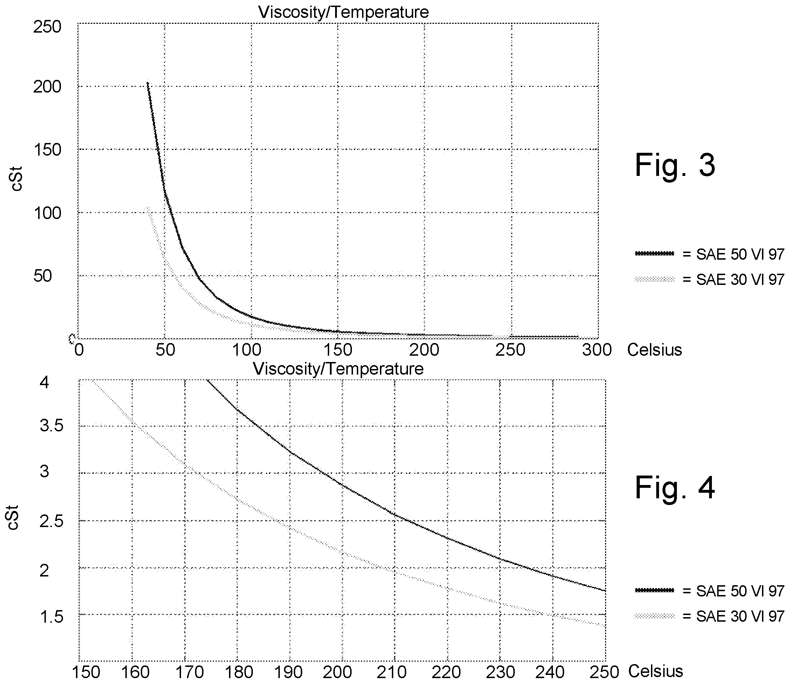

Cylinder oil prepared in accordance with the above blend on board method typically (like any typical conventional cylinder oil) has a relatively low viscosity index (mono grade type oil)i.e. they have a relative large change in viscosity with temperature. Figs. 3 and 4 illustrate the relation between temperature and viscosity in centistokes (cSt) by way of example for a SAE 30 oil and an SAE 50 oil, both having a Viscosity Index (VI) of 97.

For a typical two-stroke crosshead engine the oil delivered to the cylinders should have a viscosity between approximately 1.5 and 3 cSt at the temperature of the cylinder liner. In such an engine, the cylinder liner temperature at the maximum continuous rating of the engine (maximum load) will typically be well above 200°C, e.g. 240 to 250°C. As can be seen in Fig. 4, this results in an effective viscosity for the SAE 50 oil at the temperature of the cylinder liner of just below 2 cSt, i.e. within the specified range of 1.5 to 3 cSt.

The inventors have realized that the resulting effective viscosity of this cylinder oil when it is applied in the cylinders during slow steaming (engine load well below maximum continues rating) will be much higher than required, e.g. close to 5 cSt higher than required, because the cylinder liner temperature can be as low as 170°C during slow steaming. This results in the operational viscosity of the cylinder oil being much higher than the optimum range, and thus the slow steaming operation involves against expectations an aspect that is not energy-efficient. The inventors thus realized that it is desirable to adjust the cylinder oil viscosity to the actual engine operating conditions, e.g. by lowering the viscosity of the cylinder oil when the cylinder liner temperature is low, for example at lower engine loads.

The inventors have realized that adjusting the amount of detergent additives relative to the amount of system oil or other base fluids in a blend on board process to e.g. reduce the alkalinity of the resolving blended product can also potentially cause a shortfall in other performance factors such as thermal and oxidation performance of the resulting blended product due to insufficient levels of overall detergent content in the oil supplied to the cylinders, which is something that needs to be carefully balanced with the engine's design and its operational duty cycle and its impact on the lubricant.

EP 276-7578 discloses a process for the production of a cylinder oil comprising the steps: providing a used oil, providing a fresh cylinder oil, and blending the used oil with the fresh cylinder oil, wherein the used oil has a lower TBN value and a lower viscosity than the fresh cylinder oil. The fresh cylinder oil is added to the used oil in order to increase the BN value of the used oil, i.e. as a ABN additive, and to increase the viscosity of the used cylinder oil simultaneously, to thereby render it suitable for use as a cylinder oil.

### SUMMARY

Based upon this background it is an object to overcome or at least reduce the drawbacks indicated above.

In particular, it is an object to avoid operating the two-stroke crosshead engine with a cylinder oil that is delivered to the cylinders with a viscosity that is higher than required at the actual temperature of the cylinder liner.

This object is achieved in accordance with a first aspect by providing a method for preparing an oil to be supplied to the cylinders of a two-stroke crosshead engine with crossheads, pistons in cylinder liners and with a crankcase lubrication system operating with system oil, said method comprising:
- determining or estimating an actual cylinder liner temperature,
- determining an actual desired viscosity for the oil to be supplied to the cylinders at the determined or estimated actual cylinder liner temperature,
- withdrawing system oil from the crankcase lubrication system,
- preparing an oil for supplying to the cylinders by blending said system oil or base oil with a TBN agent, and
- adjusting a viscosity of the prepared oil to the actual desired viscosity by blending the prepared oil with a viscosity agent to obtain a viscosity adjusted oil.

With this method the viscosity can be freely adjusted to an optimized combination to match engine design, engine performance and engine load. The system can either be blending directly (in line blending) to each unit or blending to a day tank as batch blending.

The TBN value is in a possible implementation adjusted to an actual desired value, based on measurements or estimates of actual engine conditions. Thus, both the TBN and viscosity of the cylinder oil can be adapted to high load and low load, with high sulfur fuel and with low sulfur fuel for any values in between and combinations thereof.

In a first possible implementation form of the first aspect blending said system oil with a viscosity agent or with a high viscosity oil is a batch wise process.

In a second possible implementation form of the first aspect blending the prepared oil with the viscosity agent is an in-line blending process. The advantage of in-line blending is that the blends can be quickly adjusted to changes of engine load by adjusting the viscosity accordingly.

In a third possible implementation form of the first aspect blending said system oil with a TBN agent or with a high TBN oil is a batch wise process.

In a fourth possible implementation form of the first aspect determining the amount of viscosity agent to be added comprises calculating manually using a defined methodology or determining using computer software programmed with appropriate algorithms or equations.

In a fifth possible implementation form of the first aspect said TBN agent comprises fresh cylinder oil, preferably a fresh cylinder oil with a high TBN value, such as above 60.

In a sixth possible implementation form of the first aspect the viscosity modifying agent comprises a lubricating oil such as a trunk piston engine oil, gear, hydraulic or turbine oil, base oil, recycled oil, a high viscosity additive, or a fresh cylinder oil with a low TBN value, such as below 30.

In an seventh possible implementation form of the first aspect determining a desired viscosity for the cylinder oil comprises calculating manually using a defined methodology or determining using computer software programmed with appropriate algorithms or equations a desired viscosity for the cylinder oil for use in the cylinders at the determined actual cylinder liner temperature.

In an eighth possible implementation form of the first aspect determining the actual cylinder liner temperature comprises measuring the actual cylinder liner temperature at a defined point or averaged across the surface of the cylinder liner with a sensor in or at the cylinder liner surface.

In a ninth possible implementation form of the first aspect determining the actual cylinder liner temperature comprises obtaining the actual engine load and RPM (revolutions per minute) and deriving an estimated cylinder liner temperature from the obtained engine load and RPM.

In a tenth possible implementation form of the first aspect deriving an estimated cylinder liner temperature comprises calculating manually using a defined methodology or determining using computer software programmed with appropriate algorithms or equations using the engine load as the basis for calculating the estimated cylinder liner temperature.

In an eleventh possible implementation form of the first aspect determining the actual cylinder liner temperature comprises obtaining the actual cylinder jacket cooling water temperature and deriving an estimated cylinder liner temperature from the obtained cylinder jacket cooling water temperature.

In a twelfth possible implementation form of the first aspect the method further comprises determining or obtaining a desired TBN value for the oil that is supplied to the cylinders, and applying a TBN modifying agent in said prepared oil to adjust the TBN value of said oil to be supplied to the cylinders to the desired TBN value. With this feature the alkalinity (TBN) of the oil can be freely adjusted to match the fuel sulfur level, engine design, engine performance and engine load.

In a thirteenth possible implementation form of the first aspect the method is carried out aboard the marine vessel in which the two-stroke crosshead engine is installed.

In a fourteenth possible implementation form of the first aspect the TBN agent comprises an over-based detergent, the method further comprising blending a neutral detergent with the prepared oil.

In a fifteenth possible implementation form of the first aspect the amount of neutral detergent blended with the prepared oil is increased when less TBN agent has been added to the blended product and decreased when more TBN agent has been added to the blended product in order to adjust the overall amount of detergent in the oil to be supplied to the cylinders to ensure thermal and oxidation performance.

In a sixteenth possible implementation form of the first aspect the viscosity agent and the neutral detergent that are blended with the prepared oil are added together in the form of a fresh cylinder oil with a relatively low TBN value, preferably below 30.

In a seventeenth possible implementation form of the first aspect the method further comprises supplying said viscosity adjusted oil to said cylinders.

The object above is also achieved according to a second aspect by providing an apparatus for preparing oil for supplying to the cylinders of a two-stroke engine, the engine having crossheads, pistons in cylinder liners and a crankcase lubrication system operating with system oil, the apparatus comprising:
- a tank for containing TBN increasing agent,
- a tank for containing viscosity agent,
- a controllable blender configured to receive used system oil from the crankcase lubrication system, TBN increasing agent from the tank for containing TBN increasing agent, and viscosity agent from the tank for containing viscosity agent, and blend the used system oil, the TBN increasing agent and the viscosity agent in individually controllable ratios to prepare the oil for supplying to the cylinders with an individually adjusted TBN value and in individually adjusted viscosity.

The apparatus comprises an electronic control unit connected to the controllable blender, the electronic control unit being configured to receive a cylinder liner temperature or a parameter indicative of the cylinder liner temperature, the electronic control unit being configured to determine a desired viscosity of the oil supplied to the cylinders taking into account the actual cylinder liner temperature, the electronic control unit further being configured to determine the amount or proportion of viscosity agent to be blended into the oil for supplying to the cylinders in order to obtain an oil with the desired viscosity, and the electronic control unit being configured to control the controllable blender accordingly.

In a first possible implementation form of the second aspect the electronic control unit is configured to receive a desired TBN value for the oil for supplying to the cylinders, the electronic control unit further being configured to determine the amount or proportion of high TBN oil or of TBN increasing agent to be blended into the oil for supplying to the cylinders in order to obtain an oil with the desired TBN value.

In a second possible implementation form of the second aspect the oil for supplying to the cylinders has a controlled TBN and a controlled viscosity.

In a third possible implementation form of the second aspect the viscosity agent is a fluid or oil with a high viscosity and is a viscosity increasing additive, such as for example a fresh cylinder oil with a relatively low TBN.

In a fourth possible implementation form of the second aspect the viscosity agent is a fluid or oil with a low viscosity and is a viscosity decreasing additive.

In a fifth possible implementation form of the second aspect the blender is an integral blender that is configured for blending the withdrawn system oil, the TBN increasing agent and the viscosity agent, preferably in a batch wise blending process.

In a sixth possible implementation form of the second aspect the blender comprises a TBN blender for blending the used system oil with the high TBN oil or the high TBN agent and a viscosity blender for blending the blend prepared with the TBN blender with a viscosity agent.

In a seventh possible implementation form of the second aspect the TBN agent from the source of TBN agent comprises over-based detergent, the apparatus further comprising a fourth source of neutral detergent.

In an eighth possible implementation form of the second aspect the source of viscosity agent and the source of neutral detergent is formed by a single source of fresh cylinder oil with a relatively low TBN, preferably a TBN below 30.

Further implementation forms are apparent from the dependent claims, the description and the figures. These and other aspects of the invention will be apparent from the embodiment(s) described below.

### BRIEF DESCRIPTION OF THE DRAWINGS

In the following detailed portion of the present disclosure, the invention will be explained in more detail with reference to the example embodiments shown in the drawings, in which:
Fig. 1 is a diagrammatic sectional view of a lubrication system for a two-stroke crosshead engine according to an example embodiment,
Fig. 2 is a diagrammatic sectional view of a lubrication system for a large two-stroke crosshead engine according to another example embodiment,
Fig. 3 is a diagram showing the relation between temperature and viscosity of two types of oil,
Fig. 4 is an enlarged detail of the diagram of Fig.3, and
Fig. 5 is a diagrammatic sectional view of a lubrication system for a two-stroke crosshead engine according to another example embodiment, and
Fig. 6 is a diagrammatic sectional view of a lubrication system for a large two-stroke crosshead engine according to another example embodiment.

### DETAILED DESCRIPTION

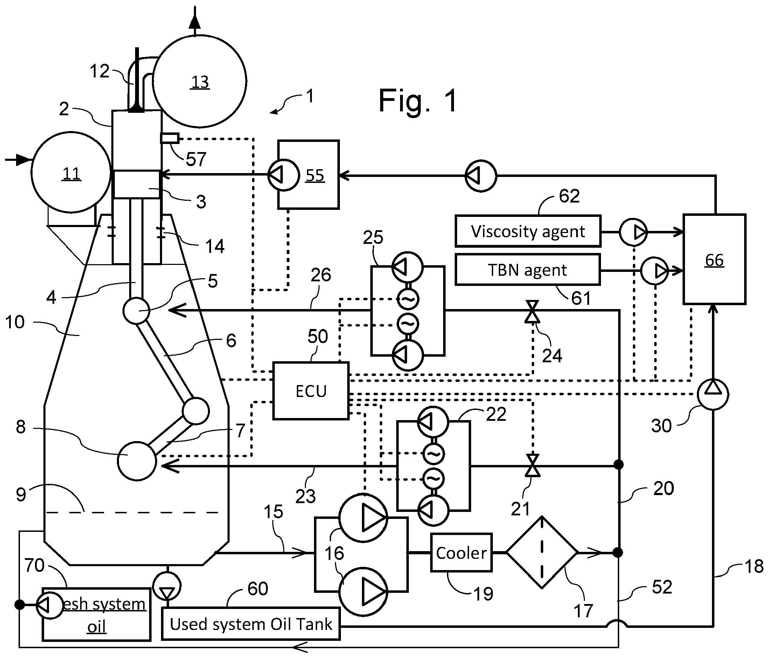

In the following detailed description, a lubrication system for a two-stroke engine crosshead engine will be described by the example embodiments. Fig. 1 diagrammatically shows a large low speed turbocharged two-stroke diesel engine 1 with a crankshaft 7 and crossheads 5 sectional view. Two-stroke crosshead engines typically have between four and sixteen cylinders in line, carried by an engine frame 10. The engine 1 may e.g. be used as the main engine in an ocean going vessel, or as prime mover in a stationary power plant. The total output of the engine may, for example, range from 5,000 to 110,000 kW.

The engine is a diesel (pressure ignited internal combustion) engine of the two-stroke uniflow type with scavenge ports 14 at the lower region of the cylinders 2 and an exhaust valve 12 at the top of the cylinders 2. The engine can be operated on various types of fuel, such as e.g. marine diesel, heavy fuel, or gas. The scavenge air is passed from the scavenge air receiver 11 to the scavenge ports 14 of the individual cylinders 2. A piston 3 in the cylinder liner 2 compresses the scavenge air, fuel is injected and combustion follows and exhaust gas is generated. When an exhaust valve 12 is opened, the exhaust gas flows through an exhaust duct associated with the cylinder concerned into the exhaust gas receiver 13 and onwards through a first exhaust conduit to a turbocharger (not shown), from which the exhaust gas flows away from the atmosphere. The turbocharger delivers pressurized scavenge air to a scavenge air conduit leading to the scavenge air receiver 11.

A piston rod 4 extends from the bottom of the piston to the crosshead 5. A connecting rod 6 connects the crosshead 5 to one of the throws of the crankshaft 7. The crankshaft 7 is rotation suspended in the engine frame and bedplate by the main bearings 8. A thrust bearing (not shown) is provided at the aft of the engine to accommodate the thrust created by a propeller (not shown) driven by the engine 1. The thrust bearing is supplied with lubrication oil by the same conduit that supplies the main bearings 8. In the main bearings 8 an oil film between the bearing surface and the journal surface carries the journal and prevents substantially any direct contact between the journal surface and the inside surface of the shells and provides lubrication. A flow of lubrication oil is supplied to the bearing surface. The lubrication oil film assists in cooling the main bearing.

Two-stroke crosshead engines include many components that are for lubrication and/or cooling purposes supplied with lubrication oil. All these components are provided with lubrication oil via the crankcase lubrication system except for the cylinders and piston rings which receive another type of oil from the cylinder oil system.

The crankcase lubrication system is essentially a closed loop lubrication system in which the system oil is recirculated. The crankcase lubrication system provides lubrication for cooling a range of components of the engine. For example, the crankshaft 7 is placed in an oil sump 9 that is provided in the lower part of the engine 1 and supplied with lubrication oil under pressure that is circulated through the oil sump 9. Other lubrication positions, such as bearings, etc. are separately provided with lubrication oil, as will be described in greater detail further below. The surplus leakage oil is collected in the oil pan 9. A lubrication oil supply loop is provided for supplying lubrication oil to all lubrication oil consumers. The lubrication oil supply loop includes a supply conduit 15 that starts at the oil sump 9. The supply conduit 15 includes two low-pressure pumps 16 arranged in parallel with respective electric drive motors for arranging the oil transport (although it is understood that there could be any other number of supply pumps). The supply conduit 15 also includes a cooler 19 for cooling the lubrication oil and a filter 17 for filtering out contamination. This can in one embodiment be a BσK 50µ filter.

The supply conduit 15 splits downstream of the filter 17 into an oil sump supply conduit 52 and a bearing supply conduit 20. The oil sump supply conduit 52 delivers filtered and cooled lubrication oil to the oil sump 9.

The bearing supply conduit 20 branches into a main bearing supply conduit 23 and a crosshead bearing supply conduit 26. The main bearing supply conduit 23 also provides the thrust bearing the aft of the engine 1 with lubrication oil.

The main bearing supply conduit 23 includes an electronically controlled valve 21 for controlling the flow. The main bearing supply conduit 23 also includes a feed pump 22. In the present embodiment a pair of parallel feed pumps is shown, but it is understood that any number of pumps could be used, although a plurality of pumps is preferred for redundancy reasons. The feed pump 22 is driven by one or more electric drive motors. The main bearing supply conduit 23 delivers a substantially constant flow of lubrication oil to the main bearings 8 during engine operation.

The crosshead bearing supply conduit 26 includes an electronically controlled valve 24 for controlling the flow. The crosshead bearing supply conduit 26 also includes a feed pump 25. In the present embodiment a pair of parallel feed pumps are shown, but it is understood that any number of pumps could be used, although a plurality of pumps is preferred for redundancy reasons. The feed pump 25 is driven by one or more electric drive motors. The crosshead bearing supply conduit 26 delivers a substantially constant flow of lubrication oil to the crosshead bearings during engine operation.

A portion of the system oil is withdrawn from the crankcase lubrication system. Hereto, a feed pump transports an amount of system oil from the oil pan 9 to a used system oil tank 60. A cylinder oil system supply conduit 18 connects to the used system oil tank 60. The cylinder oil system supply conduit 18 includes a feed pump 30 for providing the cylinder oil system with used system oil that has been withdrawn from the crankcase lubrication system.

In order to maintain a substantially constant amount of system oil while in the crankcase lubrication system, an approximately equal amount of fresh system oil as withdrawn therefrom is added to the crankcase lubrication system from a fresh oil system tank 70 using a feed pump that connects to the oil sump supply conduit 52. Thus, the system oil is continually replenished with fresh system oil, thereby rendering it practically unnecessary to completely replace the system oil in the crankcase lubrication system with fresh system oil.

The cylinder oil system includes a blender 66 that receives used system oil, preferably a controlled amount, from the used system oil tank 60. In an embodiment (not shown) the blender receives a preferably controlled amount of base oil instead or together with the system oil. The base oil can be any suitable oil such as recycled oils or auxiliary engine oil. In an embodiment of Fig. 1 the withdrawn system oil is supplied to the blender 66 continuously at a steady rate for in-line preparation of the oil to be delivered to the cylinders 2.

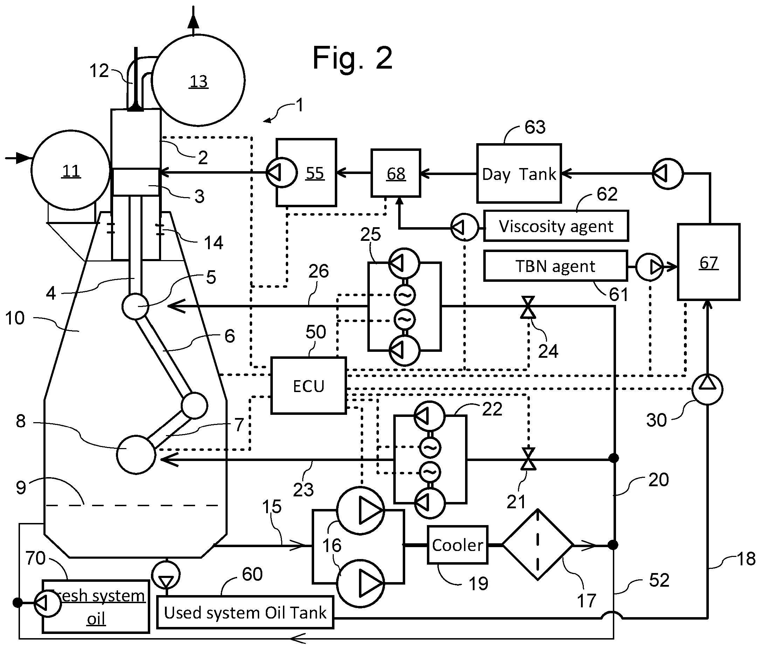

In another embodiment the system oil is supplied to the blender intermittently for batch wise preparation of oil to be delivered to the cylinders 2; this embodiment is explained here below in more detail with respect to Fig. 2.

In the blender 66 the withdrawn system oil is mixed or blended with the TBN agent and with the viscosity agent to prepare the oil to be delivered to the cylinders. The details of the blending process are described in detail further below. From the blender 66 the prepared oil, "cylinder oil" is transported by a feed pump to a cylinder oil dosage pump 55. The cylinder dosage pump 55 ensures precise and correctly timed dosage of the cylinder oil to the individual cylinders 2.

The blender 66 receives a preferably controlled amount of TBN agent from a source of TBN agent 61 via a supply conduit that includes a supply pump. The source of TBN agent can be a tank with a dedicated TBN agent with a TBN for example up to 400, or a tank with an oil with a high TBN such as a fresh commercially available "cylinder oil" with a high TBN such as e.g. a TBN equal to or above 80 or equal or above 100.

The blender 66 also receives a preferably controlled amount of viscosity agent from a source of viscosity agent 62 via a supply conduit that includes a supply pump. The source of viscosity agent can be a tank with a dedicated viscosity agent or a tank with an oil with a high viscosity, such as an oil with a viscosity equal or above SAE 50 or equal to above SAE 60. Oils with a viscosity ranging between 18 and 24 cSt at 100 °C such as fresh cylinder oil with a relatively low TBN, such as a TBN below 30 is suitable for use as viscosity agent since cylinder oils typically have a viscosity between 19 and 23 cSt at 100 °C. The oil used as viscosity agent is in an embodiment a single grade SAE.

The system oil for the crankcase lubrication system is a high quality paraffinic base oil containing a number of performance additives. The alkalinity of the system oil (defined by its TBN number) must be sufficient to neutralize any strong acids formed from combustion of the fuel which may find their way into the crankcase.

The characteristics of an example of system oil for use in the crankcase lubrication system of a two-stroke crosshead engine are as follows:

| | | |
|---|---|---|
| SAE No | | 30 |
| Specific Gravity (15°C/15°C) | | 0.894 |
| Flash Point (°C) | | 229 |
| Pour Point (°C) | | -15 |
| Viscosity: cSt | at 40 °C | 108 |
| | at 100 °C | 11.8 |
| Viscosity Index | | 97 |
| Total Base Number (mg. KOH/g) | | 5.3 |
| Sulphated Ash (% wt). | | 0.73 |

The total base number is an indication of the alkalinity of an oil in the milligrams of acid, expressed in equivalent milligrams of potassium hydroxide (KOH), required to neutralize all basic constituents.

The oil delivered to the cylinders by the cylinder oil system must be thermally stable. The oil needs be able to retain an oil film at the high surface temperatures of e.g. the piston rings and the cylinder liner 2. The oil delivered to the cylinders must have anti wear characteristics and detergents to minimize deposits on the pistons 3 and in the ring grooves.

The oil delivered to the cylinders typically has a high TBN between 30 and 100 to neutralize the acids formed by the combustion of the sulfur in the fuel. However, the required TBN value depends on the sulfur content in the fuel (which may vary) and may have a value anywhere between e.g. 30 and 100. Alkaline additives can make up about a significant portion of the oil.

The viscosity of the oil delivered to the cylinders is relatively high (e.g. 21 cSt at 100°C for an SAE 50 oil) in order to lubricate effectively at the higher temperatures (e.g. 190°C) of the cylinder liner 2 resulting in a viscosity of approximately 3.2 cSt where the oil is applied.

The oil delivered to the cylinders is a "use once consumable". The oil is injected into the cylinder at a feed rate to give optimum protection against acid corrosion and microseizures (scuffing).

The characteristics of an example of oil for supplying to the cylinders of a two-stroke crosshead engine are as follows:

| | | |
|---|---|---|
| SAE No | | 50 |
| Specific Gravity (15°C/15°C) | | 0.942 |
| Flash Point (°C) | | 241 |
| Pour Point (°C) | | -9 |
| Viscosity: cSt | at 40 °C | 247 |
| | at 100°C | 21 |
| Viscosity Index | | 100 |
| Total Base Number (mg. KOH/g) | | 70 |

The list of viscosity agents includes but is not limited to:
Used and fresh finished lubricants such as hydraulic oils, turbine oils, monograde and multigrade engine oils, gear oils, base oils including naphthenic and paraffinic mineral oils (of Group I, II and III), synthetic polyalphaolefins (PAO) polymeric entities such as polymethylmethacrylate (PMMA) and olefin copolymers (OCP) or fresh cylinder lubrication oils with a relatively low TBN and mixtures thereof.

The source of viscosity agent may comprise a source of high viscosity agents for increasing the resulting viscosity and a source of low viscosity agents for decreasing the resulting viscosity.

Adjusting the TBN to actual (present) engine operating conditions preferably comprises adjusting at least one additive level or adding one or more additives, where the additives comprise at least one base comprising basic salts of alkaline or earth alkaline elements, and/or detergents and/or dispersants. Alternatively, adjusting the TBN comprises blending with a high TBN oil, such as a commercial cylinder oil with a high TBN value, e.g. with a TBN above 100.

The alkaline/earth alkaline elements may be e.g. K, Na, Ca, Ba, Mg or the like. The basic salts may belong to the Inorganic chemical families of e.g. oxides, hydroxides, carbonates, sulfates or the like. The detergents may belong to the organic chemical families of e.g. sulfonates, salicylates, phenates, sulfophenates, Mannich-bases and the like. The dispersants may belong to the organic chemical families of succinimides or the like.

Example of blending proportions:

### Example 1.

The TBN agent is a TBN additive package in oil with a TBN value of 140 and a viscosity of 23 cSt@ 100 °C.

The viscosity agent is a fresh cylinder oil with a TBN of 25 and a viscosity of 19.5 cSt@ 100 °C

The system oil has a TBN of 6 and a viscosity of 11.5 cSt@ 100 °C.

The system oil is blended with various portions of TBN agent and viscosity agent in accordance with the table below in order to achieve the target BN for the blended product.

**Table 1:**

| Target Blended product BN | % Proportion Viscosity agent Low BN (25BN) fresh cylinder oil | % Proportion TBN agent High BN (140BN) Additive package in oil | % Proportion System Oil(6BN) | Resulting (estimated) viscosity of the blended product (cSt @ 100 °C) |
|---|---|---|---|---|
| 140 | - | 100 | - | 23.0 |
| 120 | - | 85 | 15 | 20.5 |
| 110 | - | 77 | 23 | 19.5 |
| 100 | - | 70 | 30 | 18.5 |
| 90 | - | 63 | 37 | 17.5 |
| 80 | - | 55 | 45 | 16.5 |
| 70 | 10 | 55 | 35 | 16.8 |
| 60 | 22 | 43 | 35 | 17 |
| 50 | 45 | 30 | 25 | 18 |
| 40 | 67 | 18 | 15 | 18.5 |
| 30 | 89 | 6 | 5 | 19 |
| 25 | 100% | - | - | 19.5 |

The use of the viscosity agent, in this example low BN (25 BN) fresh cylinder oil allows the blended viscosity to be controlled to a desired viscosity level, in this example using 16.5 cSt as a minimum level.

An electronic control unit 50 receives signals that contain actual (present, substantially real time) information about the engine, such as specific temperatures and pressures, such as e.g. the cylinder liner temperature, and operating conditions, such as the engine load and speed. The electronic control unit 50 is also connected, e.g. via signal cables to the feed pumps 22 for the main bearings, the control valve 21 in the main bearing supply conduit 23, the feed pumps 25 for the crosshead banks, and to the control valve 24 in the crosshead bearing supply conduit 26.

The electronic control unit 50 is also connected, e.g. via signal cables to the feed pumps that deliver the viscosity agent and the TBN agent to the mixer 66, both to the mixer 66 itself and to the cylinder oil dosage pump 55. Alternatively, the mixer 66 may be provided with its own electronic control unit (not shown), that carries out the functions that are described below that relates to the mixer 66.

The electronic control unit 50 is configured to determine the amount (flow rate) of lubrication oil that needs to be delivered to the main bearings 8. The electronic control unit 50 is also configured to determine the amount (flow rate) of lubrication oil that needs to be delivered to the crosshead bearings.

The electronic control unit 50 is also configured to obtain or determine the actual required TBN for the oil that is delivered to the cylinders 2. Hereto, the electronic control unit 50 is in receipt of actual information on the fuel quality and determines the actual required TBN from a lookup table stored in the electronic control unit 50 or by using an algorithm or equation stored in the electronic control unit 50.

Further, the electronic control unit 50 is configured to determine the actual required viscosity for the oil that is delivered to the cylinders 2. Hereto, the electronic control unit 50 is in receipt of signal representative of the actual engine load. The engine load is a parameter that is indicative of the actual cylinder liner temperature. Alternatively, the electronic control unit is in receipt of a signal from the temperature sensor (not shown) that measures the jacket cooling water temperature. The jacket cooling water temperature is also indicative of the temperature of the cylinder liner and can be used as an alternative parameter by the electronic control unit 50. Alternatively, the electronic control unit is in receipt of a signal from a temperature sensor 57 in the cylinder liner. Based on the actual temperature of the cylinder liner, or on a parameter representative thereof the electronic control unit 50 is configured to determine the actual optimal viscosity for the oil that is delivered to the cylinders.

Alternatively, the electronic control unit 50 determines directly from the parameter that is indicative of the actual cylinder liner temperature the actual required proportions of withdrawn system oil, TBN agent and viscosity agent.

The electronic control unit 50 is provided with an algorithm that determines the required proportions of withdrawn system oil, viscosity agent and TBN agent that results in a prepared oil in the blender 66 that has the determined actual optimal TBN value and the determined optimal viscosity. The electronic control unit 50 is configured to control the blender 66 and optionally the feed pumps that deliver the withdrawn system oil, the viscosity agent and the TBN agent respectively to deliver the appropriate amounts of respective fluid to the blender 66 and to blend or mix the appropriate amount of the respective fluids in the blender 66, preferably in a continuous process.

The electronic control unit 50 is configured to recalculate the required proportions of system oil, viscosity agent and TBN agent when the temperature of the cylinder liner changes and/or when the sulfur content of the fuel changes and to control the blender 66 and the feed pumps of the withdrawn system oil, of the TBN agent and of the viscosity agent accordingly.

Fig. 2 illustrates another embodiment that is essentially identical to the embodiment that is described with reference to Fig. 1, except that there are two blenders: a TBN blender 67 and a viscosity blender 68. In Fig. 2 the viscosity blender 68 is downstream of the TBN blender 67 with a tank 63 in between. This allows batch wise production of an oil blend with an adjusted TBN value and storing this oil blend with the adjusted TBN value in the day tank 63 and allows online adaptation of the batch wise produced oil blend to the required viscosity value in the online viscosity blender 68.

Changes to the sulfur content of the fuel are not frequent and can normally be foreseen well in advance. Thus, it is normally not necessary to adjust the TBN value of the oil to be delivered to the cylinders quickly or unexpectedly and therefore a batch wise production is unproblematic. However, changes to the engine load could be caused by e.g. an unexpected change in the weather or other conditions that are beyond control of the operator of the marine vessel. Therefore, it is advantageous that the adjustment of the viscosity is performed in an online blending process and allows for a quick and instantaneous adjustment of the viscosity to actual operating conditions.

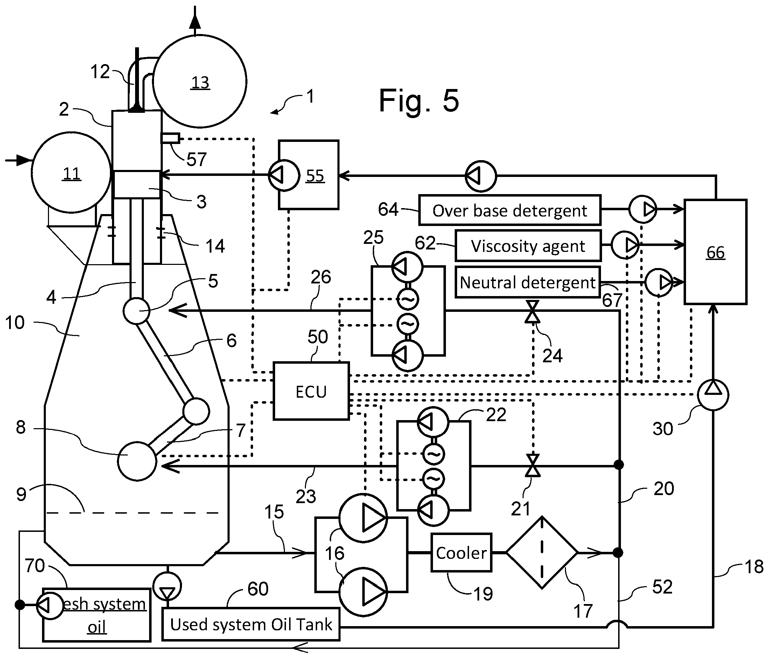

Fig. 5 illustrates another embodiment that is essentially identical to the embodiment that is described with reference to Fig. 1, except for the following differences.

In the blender 66 the withdrawn system oil is mixed or blended with a controlled amount of over-based determent acting as the TBN agent from a source of over-based detergent 64. The source of over-based detergent 64 can be a tank or container containing over-based detergent connected to the blender by a conduit including a supply pump controlled by the electronic control unit 50. However it is understood that the over-based detergent can be added in a controlled manner to the blender 66 in other ways.

A controlled amount of viscosity agent is added to withdrawn cylinder oil in the blender 66 in the same way as in the example embodiment of Fig. 1 from a source of viscosity agent 62.

A controlled amount of neutral detergent is added to the withdrawn system oil or base oil in the blender 66 from a source of neutral detergent 67. The source of neutral detergent 67 can be a tank or container containing neutral detergent connected to the blender by a conduit including a supply pump controlled by the electronic control unit 50. However it is understood that the neutral detergent can be added in a controlled manner to the blender 66 in other ways.

The control algorithm in the electronic control unit 50 is configured similar to the embodiment of Fig. 1 to control the amounts of withdrawn system oil or base oil, of over-based detergent, of neutral detergent and of viscosity agent. The electronic control unit is configured to receive the actual temperature of the cylinder liners and the actual sulfur content of the fuel and determine the required TBN and viscosity on the basis of these two measure parameters. The system can be used to maintain a required overall amount of detergent in the oil supplied to the cylinders by increasing the amount of neutral detergent added to the withdrawn system oil or base oil in the blender 66 when the amount of over-based detergent added to the withdrawn system oil or base oil in the blender 66 is lowered to lower the TBN of the oil supplied to the cylinders. The electronic control unit 50 is in an embodiment configured to automatically maintain the required overall amount of detergent in the oil supplied to the cylinders.

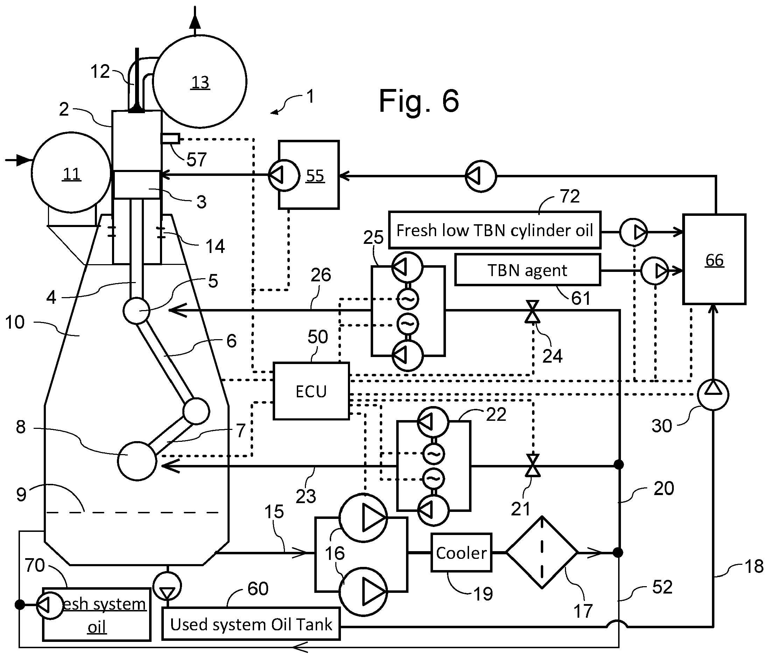

The embodiment of Fig. 6 is essentially identical to the embodiment of Fig. 5, except that the source of viscosity agent and the source of neutral detergent are combined in one source of low TBN fresh cylinder oil 72 in the form of a tank with low TBN cylinder oil connected to the blender 66 via a conduit including a supply pump controlled by the electronic control unit 50. This embodiment provides fewer degrees of freedom than the embodiment of Fig. 5, but it is a less complicated solution (since fresh cylinder oil is readily commercially available), more practical in terms of tank space on board, and less complicated to implement. However, the system still enables blending of a cylinder oil with optimum properties for a large range of engine operating conditions.

The invention has been described in conjunction with various embodiments herein. However, other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. The reference signs used in the claims shall not be construed as limiting the scope.

## Claims

1. A method for preparing an oil to be supplied to the cylinders of a two-stroke crosshead engine (1) with crossheads (5), pistons in cylinder liners (2) and with a crankcase lubrication system operating with system oil, said method comprising:
determining or estimating an actual cylinder liner temperature;
determining an actual desired viscosity for the oil to be supplied to the cylinders at the determined actual cylinder liner temperature;
withdrawing system oil from the crankcase lubrication system and/or providing a base oil;
preparing an oil for supplying to the cylinders by blending said system oil and/or base oil with a TBN agent; and
adjusting a viscosity of the prepared oil to the actual desired viscosity by blending the prepared oil with a viscosity agent to obtain a viscosity adjusted oil.

2. A method according to claim 1, wherein said TBN agent comprises fresh cylinder oil, preferably a fresh cylinder oil with a TBN value above 60.

3. A method according to claim 1 or 2, wherein the viscosity agent comprises a lubricating oil such as a trunk piston engine oil, gear, hydraulic or turbine oil, base oil, recycled oil, a high viscosity additive, or a fresh cylinder oil with a TBN value below 30.

4. A method according to any one of claims 1 to 3, wherein determining the actual cylinder liner temperature comprises measuring the actual cylinder liner temperature at a defined point, or averaged across the surface, of the cylinder liner with a sensor in or at the cylinder liner surface (2).

5. A method according to any one of claims 1 to 3, wherein determining the actual cylinder liner temperature comprises obtaining the actual engine load and/or RPM (revolutions per minute) and deriving an estimated actual cylinder liner temperature from the obtained engine load and/or RPM.

6. A method according to any one of claims 1 to 3, wherein determining the actual cylinder liner temperature comprises obtaining the actual cylinder jacket cooling water temperature and deriving an estimated actual cylinder liner temperature from the obtained actual cylinder jacket cooling water temperature.

7. A method according to any one of claims 1 to 6, further comprising:
determining or obtaining a desired actual TBN value for the oil that is supplied to the cylinders; and
applying a TBN modifying agent in said prepared oil to adjust the TBN value of said oil to be supplied to the cylinders to the desired actual TBN value.

8. A method according to any one of claims 1 to 7, wherein the TBN agent comprises an over-based detergent, the method comprising blending a neutral detergent with the prepared oil.

9. A method according to claim 8, wherein an amount of neutral detergent blended with the prepared oil is:
increased when less TBN agent has been added to the blended product; and
decreased when more TBN agent has been added to the blended product;
in order to adjust the overall amount of detergent in the oil to be supplied to the cylinders to ensure thermal and oxidation performance.

10. A method according to claim 8 or 9, wherein the viscosity agent and the neutral detergent that are blended with the prepared oil are added together in the form of a fresh cylinder oil with a TBN value below 30.

11. An apparatus for preparing oil for supplying to the cylinders of a two-stroke engine (1), the engine having crossheads (5), pistons in cylinder liners (2) and a crankcase lubrication system operating with system oil, said apparatus comprising:
- a tank (61) for containing TBN increasing agent,
- a tank (62) for containing viscosity agent;
- a controllable blender (66,67,68) configured to receive:
used system oil from the crankcase system lubrication system;
TBN increasing agent from the tank (61) for containing TBN increasing agent; and
viscosity agent from the tank (62) for containing viscosity agent;
and configured to blend said used system oil, said TBN increasing agent and said viscosity agent in individually controllable ratios to prepare the oil for supplying to the cylinders with an individually adjusted TBN value and an individually adjusted viscosity; and
- an electronic control unit (50) connected to said controllable blender (66), said electronic control unit (50) being configured to receive a cylinder liner temperature or a parameter indicative of the cylinder liner temperature, and being configured to:
determine a desired viscosity of the oil supplied to the cylinders, taking into account the actual cylinder liner temperature or parameter indicative of the cylinder liner temperature;
determine the amount or proportion of viscosity agent to be blended into the oil for supplying to the cylinders in order to obtain an oil with the desired viscosity; and
control said controllable blender (66) accordingly.

12. An apparatus according to claim 11, said electronic control unit (50) being configured to receive a desired TBN value for the oil for supplying to the cylinders, and said electronic control unit (50) further being configured to determine an amount or proportion of the TBN increasing agent to be blended into the oil for supplying to the cylinders in order to obtain an oil with the desired TBN value.

13. An apparatus according to claim 11 or 12, wherein said viscosity agent is:
a fluid or oil with a high viscosity and is a viscosity increasing additive, such as fresh cylinder oil with a relatively low TBN; or
a fluid or oil with a low viscosity and is a viscosity decreasing additive.

14. An apparatus according to any one of claims 11 to 13, wherein said blender:
is an integral blender (66) that is configured for blending the used system oil, the TBN increasing agent and the viscosity agent, preferably in a batch wise blending process; or
comprises a TBN blender (67) for blending the used system oil with the TBN increasing agent, and a viscosity blender (68) for blending the blend prepared with said TBN blender (67) with a viscosity agent.

## Patentansprüche

1. Verfahren zum Aufbereiten eines Öls, das die Zylinder eines Zweitakt-Kreuzkopfmotors (1) mit Kreuzköpfen (5), Kolben in Zylinderlaufbuchsen (2) und mit einem Kurbelgehäuseschmiersystem, das mit Systemöl arbeitet, versorgt, wobei das Verfahren umfasst:
Bestimmen oder Schätzen einer tatsächlichen Zylinderlaufbuchsentemperatur;
Bestimmen einer tatsächlichen gewünschten Viskosität für das Öl, das die Zylinder versorgt, bei der bestimmten tatsächlichen Zylinderlaufbuchsentemperatur;
Entnehmen von Systemöl aus dem Kurbelgehäuseschmiersystem und/oder Bereitstellen eines Basisöls;
Aufbereiten eines Öls zum Versorgen der Zylinder durch Mischen des Systemöls und/oder des Basisöls mit einem TBN-Mittel; und
Anpassen einer Viskosität des aufbereiteten Öls an die tatsächlich gewünschte Viskosität durch Mischen des aufbereiteten Öls mit einem Viskositätsmittel, um ein viskositätsangepasstes Öl zu erhalten.

2. Verfahren nach Anspruch 1, wobei das TBN-Mittel frisches Zylinderöl umfasst, vorzugsweise ein frisches Zylinderöl mit einem TBN-Wert über 60.

3. Verfahren nach Anspruch 1 oder 2, wobei das Viskositätsmittel ein Schmieröl, wie z. B. ein Tauchkolbenmotoröl, ein Getriebe-, Hydraulik- oder Turbinenöl, ein Basisöl, ein recyceltes Öl, ein hochviskoses Additiv oder ein frisches Zylinderöl mit einem TBN-Wert unter 30 umfasst.

4. Verfahren nach einem der Ansprüche 1 bis 3, wobei Bestimmen der tatsächlichen Zylinderlaufbuchsentemperatur Messen der tatsächlichen Zylinderlaufbuchsentemperatur an einem definierten Punkt oder gemittelt über die Oberfläche der Zylinderlaufbuchse mit einem Sensor in oder an der Oberfläche der Zylinderlaufbuchse (2) umfasst.

5. Verfahren nach einem der Ansprüche 1 bis 3, wobei Bestimmen der tatsächlichen Zylinderlaufbuchsentemperatur Erhalten der tatsächlichen Motorlast und/oder Drehzahl (Umdrehungen pro Minute) und Ableiten einer geschätzten tatsächlichen Zylinderlaufbuchsentemperatur aus der erhaltenen Motorlast und/oder Drehzahl umfasst.

6. Verfahren nach einem der Ansprüche 1 bis 3, wobei Bestimmen der tatsächlichen Zylinderlaufbuchsentemperatur Erhalten der tatsächlichen Zylindermantelkühlwassertemperatur und Ableiten einer geschätzten tatsächlichen Zylinderlaufbuchsentemperatur aus der erhaltenen tatsächlichen Zylindermantelkühlwassertemperatur umfasst.

7. Verfahren nach einem der Ansprüche 1 bis 6, ferner Folgendes umfassend:
Bestimmen oder Erhalten eines gewünschten tatsächlichen TBN-Wertes für das Öl, mit dem die Zylinder versorgt werden; und
Hinzugeben eines TBN-Modifizierungsmittels in das aufbereitete Öl, um den TBN-Wert des Öls, mit dem die Zylinder versorgt werden, an den gewünschten tatsächlichen TBN-Wert anzupassen.

8. Verfahren nach einem der Ansprüche 1 bis 7, wobei das TBN-Mittel ein überbasisches Detergens umfasst, wobei das Verfahren Mischen eines neutralen Detergens mit dem aufbereiteten Öl umfasst.

9. Verfahren nach Anspruch 8, wobei eine Menge des neutralen Detergens, das mit dem aufbereiteten Öl gemischt ist:
erhöht wird, wenn dem Mischprodukt weniger TBN-Mittel hinzugegeben wurde; und
verringert wird, wenn dem Mischprodukt mehr TBN-Mittel hinzugegeben wurde;
um die Gesamtmenge an Detergens in dem Öl einzustellen, das die Zylinder versorgt, um die thermische und oxidative Leistung sicherzustellen.

10. Verfahren nach Anspruch 8 oder 9, wobei das Viskositätsmittel und das neutrale Detergens, die mit dem aufbereiteten Öl gemischt werden, zusammen in Form eines frischen Zylinderöls mit einem TBN-Wert unter 30 hinzugegeben werden.

11. Vorrichtung zum Aufbereiten von Öl zur Versorgung der Zylinder eines Zweitaktmotors (1), wobei der Motor Kreuzköpfe (5), Kolben in Zylinderlaufbuchsen (2) und ein Kurbelgehäuseschmiersystem aufweist, das mit Systemöl betrieben wird, wobei die Vorrichtung Folgendes umfasst:
- einen Tank (61) zum Beinhalten eines TBN-erhöhenden Mittels,
- einen Tank (62) zum Beinhalten eines Viskositätsmittels;
- einen steuerbaren Mischer (66, 67, 68), der dazu konfiguriert ist, Folgendes aufzunehmen:
gebrauchtes Systemöl aus dem Kurbelgehäuseschmiersystem;
TBN-erhöhendes Mittel aus dem Tank (61) zum Beinhalten von einem TBN-erhöhendem Mittel; und
Viskositätsmittel aus dem Tank (62) zum Beinhalten von Viskositätsmittel;
und dazu konfiguriert, das gebrauchte Systemöl, das TBN-erhöhende Mittel und das Viskositätsmittel in individuell steuerbaren Verhältnissen zu mischen, um das Öl zur Versorgung der Zylinder mit einem individuell eingestellten TBN-Wert und
einer individuell eingestellten Viskosität aufzubereiten; und
- eine elektronische Steuereinheit (50), die mit dem steuerbaren Mischer (66) verbunden ist, wobei die elektronische Steuereinheit (50) dazu konfiguriert ist, eine Zylinderlaufbuchsentemperatur oder einen Parameter zu empfangen, der die Zylinderlaufbuchsentemperatur anzeigt, und zu Folgendem konfiguriert ist:
Bestimmen einer gewünschten Viskosität des Öls, mit dem die Zylinder versorgt werden, wobei die tatsächliche Zylinderlaufbuchsentemperatur oder der Parameter, der die Zylinderlaufbuchsentemperatur anzeigt, berücksichtigt werden;
Bestimmen der Menge oder des Anteils des Viskositätsmittels, das mit dem Öl zur Versorgung der Zylinder gemischt wird, um ein Öl mit der gewünschten Viskosität zu erhalten; und
entsprechendes Steuern des steuerbaren Mischers (66).

12. Vorrichtung nach Anspruch 11, wobei die elektronische Steuereinheit (50) dazu konfiguriert ist, einen gewünschten TBN-Wert für das Öl zur Versorgung der Zylinder zu empfangen, und wobei die elektronische Steuereinheit (50) ferner dazu konfiguriert ist, eine Menge oder einen Anteil des TBN-erhöhenden Mittels zu bestimmen, das mit dem Öl zur Versorgung der Zylinder gemischt wird, um ein Öl mit dem gewünschten TBN-Wert zu erhalten.

13. Vorrichtung nach Anspruch 11 oder 12, wobei das Viskositätsmittel Folgendes ist:
ein Fluid oder Öl mit hoher Viskosität, das ein viskositätserhöhender Zusatz ist, wie z. B. frisches Zylinderöl mit einer relativ niedrigen TBN; oder
ein Fluid oder Öl mit einer niedrigen Viskosität, das ein viskositätssenkendes Additiv ist.

14. Vorrichtung nach einem der Ansprüche 11 bis 13, wobei der Mischer:
ein integraler Mischer (66) ist, der dazu konfiguriert ist, das gebrauchten Systemöl, das TBN-erhöhende Mittel und das Viskositätsmittels zu mischen, vorzugsweise in einem chargenweisen Mischprozess; oder
einen TBN-Mischer (67) umfasst, um das gebrauchte Systemöl mit dem TBN-erhöhenden Mittel zu mischen, und einen Viskositätsmischer (68), um die Mischung, die mit dem TBN-Mischer (67) aufbereitet ist, mit einem Viskositätsmittel zu mischen.

## Revendications

1. Procédé de préparation d'une huile à fournir aux cylindres d'un moteur à crosse à deux temps (1) avec des crosses (5), des pistons dans des chemises de cylindre (2) et avec un système de lubrification de carter fonctionnant avec une huile de système, ledit procédé comprenant :
la détermination ou l'estimation d'une température réelle de chemise de cylindre ;
la détermination d'une viscosité réelle souhaitée pour l'huile à fournir aux cylindres à la température réelle déterminée de chemise de cylindre ;
le retrait de l'huile de système du système de lubrification de carter et/ou la fourniture d'une huile de base ;
la préparation d'une huile à fournir aux cylindres en mélangeant ladite huile de système et/ou une huile de base avec un agent TBN ; et
l'ajustement d'une viscosité de l'huile préparée à la viscosité réelle souhaitée en mélangeant l'huile préparée avec un agent de viscosité pour obtenir une huile à viscosité ajustée.

2. Procédé selon la revendication 1, dans lequel ledit agent TBN comprend une huile de cylindre neuve, de préférence une huile de cylindre neuve avec une valeur TBN supérieure à 60.

3. Procédé selon la revendication 1 ou 2, dans lequel l'agent de viscosité comprend une huile lubrifiante telle qu'une huile de moteur à piston fourreau, une huile pour engrenage, hydraulique ou de turbine, une huile de base, une huile recyclée, un additif à haute viscosité ou une huile de cylindre neuve, avec une valeur TBN inférieure à 30.

4. Procédé selon l'une quelconque des revendications 1 à 3, dans lequel la détermination de la température réelle de chemise de cylindre comprend la mesure de la température réelle de chemise de cylindre en un point défini, ou moyennée sur la surface, de la chemise de cylindre avec un capteur dans ou au niveau de la surface de chemise de cylindre (2).

5. Procédé selon l'une quelconque des revendications 1 à 3, dans lequel la détermination de la température réelle de chemise de cylindre comprend l'obtention de la charge réelle et/ou de la vitesse de rotation (tours par minute) de moteur et la dérivation d'une température réelle estimée de chemise de cylindre à partir de la charge et/ou de la vitesse de rotation de moteur obtenue(s).

6. Procédé selon l'une quelconque des revendications 1 à 3, dans lequel la détermination de la température réelle de chemise de cylindre comprend l'obtention de la température réelle d'eau de refroidissement d'enveloppe de cylindre et la dérivation d'une température réelle estimée de chemise de cylindre à partir de la température réelle obtenue d'eau de refroidissement d'enveloppe de cylindre.

7. Procédé selon l'une quelconque des revendications 1 à 6, comprenant en outre :
la détermination ou l'obtention d'une valeur TBN réelle souhaitée pour l'huile qui est fournie aux cylindres ; et
l'application d'un agent de modification de TBN dans ladite huile préparée pour ajuster la valeur TBN de ladite huile à fournir aux cylindres à la valeur TBN réelle souhaitée.

8. Procédé selon l'une quelconque des revendications 1 à 7, dans lequel l'agent TBN comprend un détergent surbasique, le procédé comprenant le mélange d'un détergent neutre avec l'huile préparée.

9. Procédé selon la revendication 8, dans lequel une quantité de détergent neutre mélangé à l'huile préparée est :
augmentée lorsque moins d'agent TBN a été ajouté au produit mélangé ; et
diminuée lorsque plus d'agent TBN a été ajouté au produit mélangé ;
afin d'ajuster la quantité globale de détergent dans l'huile à fournir aux cylindres pour assurer les performances thermiques et d'oxydation.

10. Procédé selon la revendication 8 ou 9, dans lequel l'agent de viscosité et le détergent neutre qui sont mélangés à l'huile préparée sont ajoutés ensemble sous la forme d'une huile de cylindre neuve avec une valeur TBN inférieure à 30.

11. Appareil de préparation d'huile à fournir aux cylindres d'un moteur à deux temps (1), le moteur ayant des crosses (5), des pistons dans des chemises de cylindre (2) et un système de lubrification de carter fonctionnant avec une huile de système, ledit appareil comprenant :
- un réservoir (61) pour contenir un agent d'augmentation de TBN,
- un réservoir (62) pour contenir un agent de viscosité ;
- un mélangeur pouvant être commandé (66, 67, 68) configuré pour recevoir :
une huile de système usagée provenant du système de lubrification de système de carter ;
un agent d'augmentation de TBN provenant du réservoir (61) pour contenir un agent d'augmentation de TBN ; et
un agent de viscosité provenant du réservoir (62) pour contenir un agent de viscosité ;
et configuré pour mélanger ladite huile de système usagée, ledit agent d'augmentation de TBN et ledit agent de viscosité dans des rapports pouvant être commandés individuellement pour préparer l'huile à fournir aux cylindres avec une valeur TBN ajustée individuellement et une viscosité ajustée individuellement ; et
- une unité de commande électronique (50) reliée audit mélangeur pouvant être commandé (66), ladite unité de commande électronique (50) étant configurée pour recevoir une température de chemise de cylindre ou un paramètre indicatif de la température de chemise de cylindre, et étant configurée pour :
déterminer une viscosité souhaitée de l'huile fournie aux cylindres, en tenant compte de la température réelle de chemise de cylindre ou du paramètre indicatif de la température de chemise de cylindre ;
déterminer la quantité ou la proportion d'agent de viscosité à mélanger dans l'huile à fournir aux cylindres afin d'obtenir une huile avec la viscosité souhaitée ; et
commander ledit mélangeur pouvant être commandé (66) en conséquence.

12. Appareil selon la revendication 11, ladite unité de commande électronique (50) étant configurée pour recevoir une valeur TBN souhaitée pour l'huile à fournir aux cylindres, et ladite unité de commande électronique (50) étant en outre configurée pour déterminer une quantité ou une proportion de l'agent d'augmentation de TBN à mélanger dans l'huile à fournir aux cylindres afin d'obtenir une huile avec la valeur TBN souhaitée.

13. Appareil selon la revendication 11 ou 12, dans lequel ledit agent de viscosité est :
un fluide ou une huile à haute viscosité et qui est un additif augmentant la viscosité, tel qu'une huile de cylindre neuve avec un TBN relativement faible ; ou
un fluide ou une huile à faible viscosité et qui est un additif diminuant la viscosité.

14. Appareil selon l'une quelconque des revendications 11 à 13, dans lequel ledit mélangeur :
est un mélangeur intégré (66) qui est configuré pour mélanger l'huile de système usagée, l'agent d'augmentation de TBN et
l'agent de viscosité, de préférence dans un processus de mélange discontinu ; ou
comprend un mélangeur TBN (67) pour mélanger l'huile de système usagée avec l'agent d'augmentation de TBN, et un mélangeur de viscosité (68) pour mélanger le mélange préparé avec ledit mélangeur TBN (67) avec un agent de viscosité.
